# EUROPÄISCHE PATENTSCHRIFT

(11) **EP 1 295 036 B1**
(45) Veröffentlichungstag und Bekanntmachung des Hinweises auf die Patenterteilung: **28.01.2004**
(21) Anmeldenummer: 01953970.9
(22) Anmeldetag: 01.06.2001
(51) Int. Cl.: F04C 15/00, F04C 2/18, F04C 13/00, F16C 37/00

(54) **ZAHNRADPUMPE**
GEAR PUMP
POMPE A ENGRENAGES

(30) Priorität: 28.06.2000 DE 10031470
(43) Veröffentlichungstag der Anmeldung: 26.03.2003
(73) Patentinhaber: Coperion Werner & Pfleiderer GmbH & Co. KG, 70469 Stuttgart (DE)
(72) Erfinder: SCHLIPF, Edgar, R., 73269 Hochdorf (DE); HEIDEMEYER, Peter, 70806 Kornwestheim (DE); HERTER, Rainer, 74199 Untergruppenbach (DE)
(74) Vertreter: Rau, Manfred, Dr. Dipl.-Ing.
(86) Internationale Anmeldenummer: PCT/EP2001/006264
(87) Internationale Veröffentlichungsnummer: WO 2002/001072

(56) Entgegenhaltungen:
- EP-A- 0 669 465
- EP-A- 0 715 078
- DE-C- 349 786
- GB-A- 264 105
- GB-A- 1 124 147
- GB-A- 2 121 118
- US-B1- 6 210 042

## Beschreibung

Die Erfindung betrifft eine Zahnradpumpe nach dem Oberbegriff des Anspruches 1.

Bei derartigen Zahnradpumpen ist die Lagertemperatur von entscheidender Bedeutung für die maximal zulässige Drehzahl und damit für den Durchsatz der Pumpe. Da die Gleit-Lager üblicherweise mittels des Fördermediums geschmiert werden, erfolgt bei hochviskosen Fördermedien eine hohe Energieeinleitung im Lagerspalt. Da das Fördermedium in der Regel eine maximal zulässige Höchsttemperatur aufweist, ist die Drehzahl und damit der Durchsatz der Zahnradpumpe begrenzt. Besonders bedeutsam ist dies, wenn das Fördermedium durch eine Kunststoffschmelze gebildet wird. Deren maximal zulässige Temperaturen liegen in der Regel bei 300 bis 350° C.

Aus der EP 0 715 078 A2 ist eine Zahnradpumpe der gattungsgemäßen Art bekannt geworden, die mäanderförmig im Gleit-Lager ausgebildete Kühlkanäle aufweist. Auch wenn durch Temperaturanstieg des Kühlmediums im Kühlkanal die Temperaturdifferenz zwischen Fördermedium und Kühlmedium unterschiedlich sein mögen, so ist hiermit eine Beeinflussung des Kühlverhaltens nicht möglich.

Aus der GB 264,105 A sind Lager bekannt, deren obere Lagerschale in gleichmäßigen Abständen mäanderförmig miteinander verbundene Kühlkanäle aufweist. Die Kühlkanäle sind in gleichmäßigen Abständen angeordnet. Die untere Lagerschale ist mit einer umlaufenden Ausnehmung verbunden, in die Öffnungen von Kühlmittelzuführ- und -abführkanälen einmünden.

Aus der GB 1,124,147 A sind kühlbare Spindel-Lager bekannt, wobei die Außenringe der Lager in einer durchgehenden Büchse angeordnet sind, die einen schraubenlinienförmig umlaufenden Kühlkanal aufweist, der durchgehend gleichen Querschnitt aufweist. Lediglich im Eingangs- und Ausgangsbereich ist durch den Anschnitt an einer kurzen Stelle ein vergrößerter bzw. verkleinerter Querschnitt erzeugt.

Aus der DE 34 97 86 C sind gekühlte Gleitlager bekannt, die in gleichen Abständen voneinander angeordnete achsparallele Kühlkanäle aufweisen, die mäanderförmig miteinander verbunden sind.

Aus der EP 0 607 999 B1 ist es bekannt, die Wellen der Zahnrad-Rotoren mit Kühlkanälen zu versehen.

Der Erfindung liegt die Erkenntnis zugrunde, daß der Wärmeanfall im Gleit-Lager über dessen Umfang und über dessen Erstreckung in Richtung der Mittel-Längs-Achse unterschiedlich ist.

Der Erfindung liegt daher die Aufgabe zugrunde, eine Zahnradpumpe der gattungsgemäßen Art so auszugestalten, daß die Wärmeabfuhr im Gleit-Lager optimiert wird.

Diese Aufgabe wird erfindungsgemäß durch die Merkmale im Kennzeichnungsteil des Anspruches 1 gelöst.

Die größte Energieeinleitung erfolgt üblicherweise dort, wo der Lagerspalt, das heißt der Spalt zwischen dem Lagerabschnitt der Welle und dem als Gleit-Lager bezeichneten Bereich der Lagerschale am kleinsten ist, da hier die Scherung des hochviskosen Fördermediums am größten ist. Hier wird in besonders großem Maße mechanische Energie in Wärmeenergie umgewandelt. In diesem Bereich sollte die Kühlung besonders intensiv sein.

Die Unteransprüche geben zahlreiche vorteilhafte und zum Teil erfmderische Ausgestaltungen wieder.

Weitere Merkmale, Vorteile und Einzelheiten der Erfindung ergeben sich aus der nachfolgenden Beschreibung von Ausführungsbeispielen anhand der Zeichnung. Es zeigen
- Fig. 1: eine Zahnradpumpe in einem Querschnitt gemäß der Schnittlinie I-I in Fig. 2,
- Fig. 2: einen Querschnitt durch die Zahnradpumpe gemäß der Schnittlinie II-II in Fig. 1,
- Fig. 3: eine Draufsicht auf ein erstes Ausführungsbeispiel von GleitLagern gemäß dem Sichtpfeil III in Fig. 2,
- Fig. 4: einen Längsschnitt durch das Gleit-Lager gemäß der Schnittlinie IV-IV in Fig. 3,
- Fig. 5: eine Draufsicht auf ein zweites Ausführungsbeispiel von GleitLagern in einer Darstellung entsprechend Fig. 3,
- Fig. 6: ein drittes Ausführungsbeispiel von Gleit-Lagern in einer Draufsicht entsprechend Fig. 3,
- Fig. 7: ein viertes Ausführungsbeispiel von Gleit-Lagern in einer Draufsicht entsprechend Fig. 3,
- Fig. 8: ein fünftes Ausführungsbeispiel von Gleit-Lagern in einer Draufsicht entsprechend Fig. 3,
- Fig. 9: ein sechstes Ausführungsbeispiel von Gleit-Lagern in einer perspektivischen Ansicht,
- Fig. 10: ein siebtes Ausführungsbeispiel von Gleit-Lagern in einer perspektivischen Ansicht,
- Fig. 11: einen Querschnitt durch das Gleitlager entsprechend der Schnittlinie XI-XI in Fig. 10 und
- Fig. 12: ein achtes Ausführungsbeispiel eines Gleit-Lagers in einer per spektivischen Darstellung.

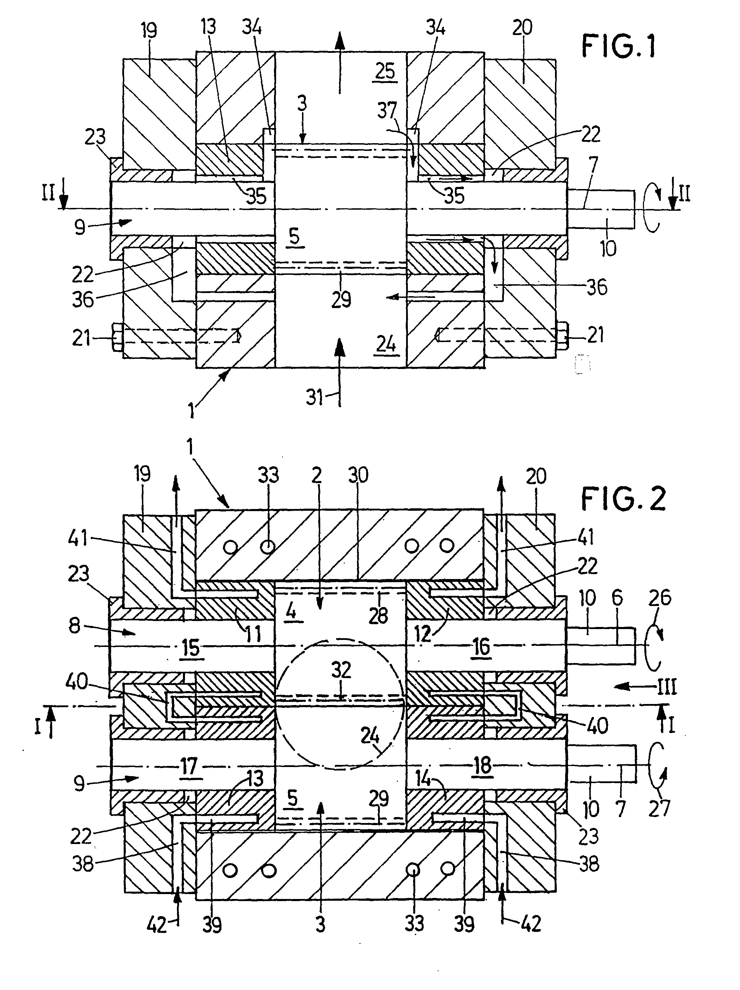

Die in den Fig. 1 und 2 dargestellte Zahnradpumpe weist ein Gehäuse 1 auf, in dem zwei Zahnrad-Rotoren 2, 3 angeordnet sind. Jeder Rotor 2, 3 weist einen Zahn-Abschnitt 4, 5 auf, die miteinander kämmen. Jeder Rotor 2, 3 weist weiterhin eine koaxial zur Mittel-Längs-Achse 6, 7 des Rotors 2 bzw. 3 angeordnete, drehfest mit dem Zahn-Abschnitt 4 bzw. 5 verbundene Welle 8, 9 auf, die an einem Ende mit einem Antriebs-Zapfen 10 versehen ist.

Beiderseits der Zahn-Abschnitte 4, 5 sind im Gehäuse 1 Gleit-Lager 11, 12, 13, 14 angeordnet und abgestützt, in denen die Wellen 8, 9 mit Lager-Abschnitten 15, 16, 17, 18 drehbar gelagert sind. Das Gehäuse 1 ist an seinen Stirnseiten mittels zweier Deckel 19, 20 verschlossen, die durch nur angedeutete Schrauben 21 lösbar gehalten sind. Die Wellen 8, 9 sind durch Öffnungen 22 in den Deckeln 19, 20 aus dem Gehäuse heraus geführt. Zur Abdichtung zwischen der jeweiligen Welle 8, 9 und der Öffnung 22 ist eine Dichtung 23 vorgesehen.

In der in Fig. 2 dargestellten Ebene, die senkrecht zu der durch die beiden Achsen 6, 7 aufgespannten Ebene verläuft, ist auf einer Seite der Rotoren 2, 3 die Saugseite 24 der Pumpe; auf der gegenüberliegenden Seite ist die Druckseite 25. Die Rotoren 2, 3 werden entsprechend den Drehrichtungspfeilen 26, 27 gegensinnig angetrieben; ihre Verzahnungen 28, 29 laufen gegenüber der Innenwand 30 des Gehäuses 1 nahezu spielfrei um. Sie fördern das zu fördernde Medium von der Saugseite 24 zur Druckseite 25 entsprechend dem Förderrichtungspfeil 31.

Das Gehäuse 1 weist Kanäle 33 für ein Temperiermedium auf. Die Gleit-Lager 11 bis 14 werden von dem Fördermedium, in der Regel einem höherviskosen gegebenenfalls auch strukturviskosen Fördermedium, wie beispielsweise einer Kunststoffschmelze, geschmiert. Hierzu münden Fördermedium-Abzweigkanäle 34 aus der Druckseite 25 der Pumpe aus und führen zu dem oder den, parallel zur jeweiligen Achse 6 bzw. 7 verlaufenden Gleitlagerspalten 35, von wo das Fördermedium in üblicher Weise zur Schmierung zwischen dem jeweiligen Lager-Abschnitt 15 bis 18 der Welle 8 bzw. 9 und dem jeweiligen Gleit-Lager 11 bis 14 dient. Das Fördermedium wird aus den Gleit-Lagern 11 bis 14 durch Fördermedium-Rückführkanäle 36, die zum Teil im jeweiligen Deckel 19, 20 und zum Teil im Gehäuse 1 ausgebildet sind, zur Saugseite 24 zurück geführt. Das Fördennedium durchströmt die Gleit-Lager 11 bis 14 also entsprechend dem Strömungsrichtungspfeil 37 von der Druckseite 25 zur Saugseite 24 der Pumpe.

Die Gleit-Lager 11 bis 14 sind gekühlt. Hierzu ist jeweils im Deckel 19 bzw. 20 ein Kühlmedium-Zuführkanal 38 ausgebildet, der an ein oder mehrere Kühlkanäle 39 im Gleit-Lager 13 bzw. 14 angeschlossen ist. Zwischen den Wellen 9, 8 ist in jedem Deckel 19, 20 ein Überströmkanal 40 ausgebildet, der wiederum an entsprechende Kühlkanäle 39 im Gleit-Lager 11, 12 angeschlossen ist. Aus dem Kühlkanal 39 der Gleit-Lager 11, 12 tritt das Kühlmedium durch einen Kühlmedium-Abführkanal 41 aus. Das Kühlmedium durchströmt die Kanäle also in Strömungsrichtung 42.

Nachfolgend werden verschiedene Ausgestaltungen der Kühlkanäle 39 beschrieben. Da die Ausgestaltung in den einzelnen Gleit-Lagern 11 bis 14 jeweils identisch bzw. spiegelsymmetrisch ist, wird die Ausgestaltung und Anordnung grundsätzlich nur für ein Gleit-Lager 12 beschrieben.

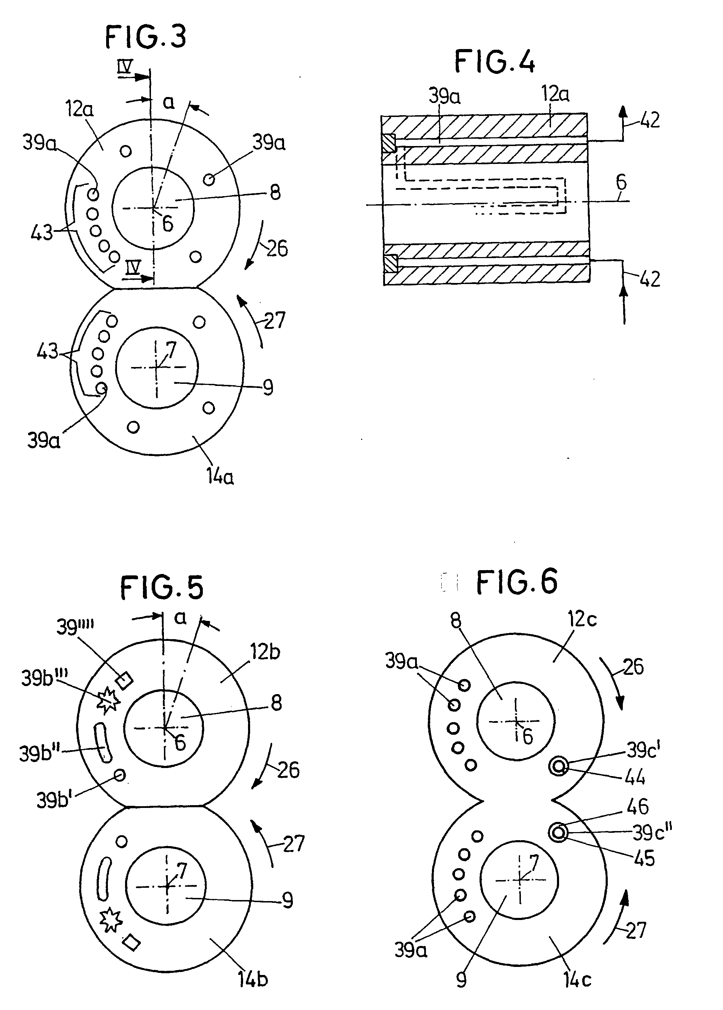

Bei der Ausgestaltung nach den Fig. 3 und 4 weisen die Gleit-Lager 12a, 14a mäanderförmig und parallel zur Achse 6 bzw. 7 verlaufende durchgehende Kühlkanäle 39a auf, deren Querschnitt jeweils identisch ist, die aber in unterschiedlicher Verteilung über den Umfang des Gleit-Lagers 12a, 14a angeordnet sind. Wie Fig. 3 entnehmbar ist, weisen die Gleit-Lager einen Bereich 43 relativer Verdichtung der Kühlkanäle 39a auf. In diesem Bereich ist die Wärmeabfuhr aus dem Gleit-Lager also erheblich größer als aus den übrigen Bereichen, in denen benachbarte Kühlkanäle 39a erheblich größeren Abstand voneinander aufweisen. Die wärmeabführende Oberfläche der Kühlkanäle 39a pro Umfangsausdehnungseinheit, also pro Winkeleinheit a ist im Bereich 43 also größer als in den übrigen Umfangsbereichen.

Bei einer weiteren Ausgestaltung nach Fig. 5 sind die Kühlkanäle 39b ebenfalls mäanderförmig ausgebildet, wie es in Fig. 4 angedeutet ist. Sie haben aber über den Umfang verteilt unterschiedlich große wärmetauschende Oberflächen pro Umfangsausdehnungseinheit, das heißt pro Winkeleinheit a. Die Kühlkanäle 39b haben also unterschiedliche Querschnittsformen. Es kann sich hierbei um einen Kühlkanal 39b' mit zylindrischem Querschnitt oder um einen Kühlkanal 39b" mit einem ovalen oder nierenförmigen Querschnitt, um einen Kühlkanal 39b''' mit dem Querschnitt eines Vielkeils oder um einen Kühlkanal 39b'''' mit quadratischem Querschnitt handeln. Diese Kühlkanäle 39b haben also voneinander durch Form und/oder Größe abweichende wärmeaustauschende Oberflächen.

Bei dem Ausführungsbeispiel nach Fig. 6 sind in den Gleit-Lagern 12c, 14c Kühlkanäle 39a ausgebildet, deren Verlauf mäanderförmig wie in der Ausgestaltung nach Fig. 4 ist. Weiterhin sind im Bereich relativ geringer Energieeinleitung Kühlkanäle 39c vorgesehen, die unterschiedlich ausgestattete Oberflächen aufweisen, durch die der Wärmeübergang pro Flächeneinheit des Kühlkanals 39c vom Gleit-Lager 12c bzw. 14c an das Kühlmedium beeinflußt wird. Hierbei kann es sich um unterschiedliche Oberflächenrauigkeit handeln, die die Wärmeübergangszahlen beeinflußt. Es können auch unterschiedlich wärmeleitende Materialien eingesetzt werden. Bei einem Kühlkanal 39c' ist eine Isolierbüchse 44 eingesetzt, bei der es sich um eine Voll-Materialbüchse handelt. Bei einem Kühlkanal 39c" ist eine Isolierbüchse 45 eingesetzt, zwischen der und dem Material des Gleit-Lagers 14c noch ein Luftspalt 46 ausgebildet ist.

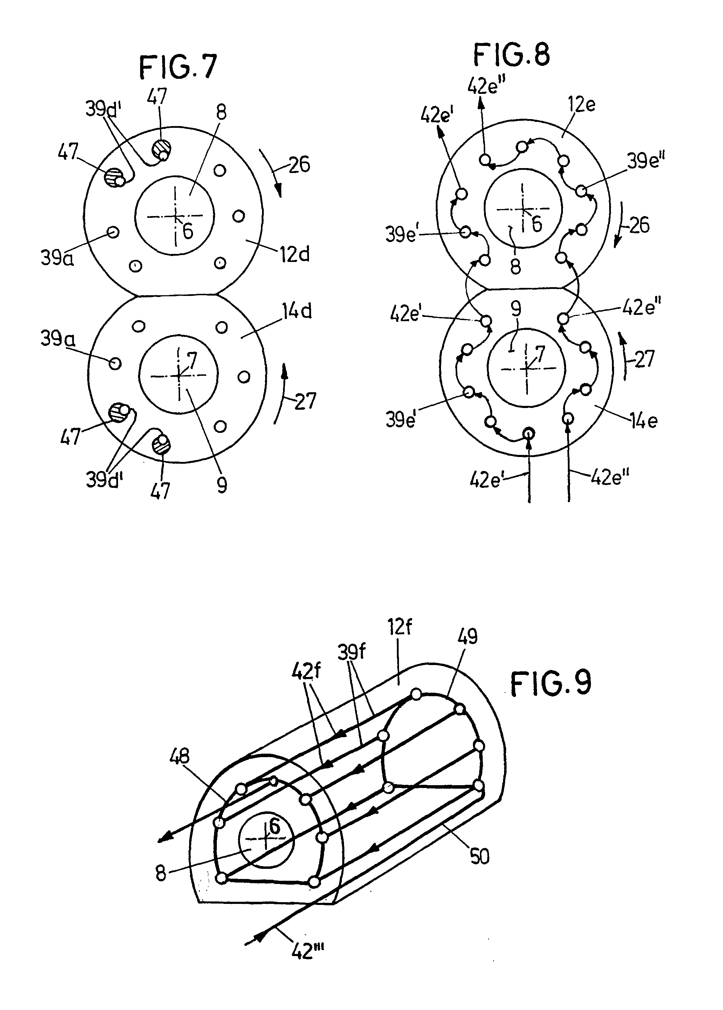

Beim Ausführungsbeispiel nach Fig. 7 sind in den Gleit-Lagern 12d und 14d Kühlkanäle 39a ausgebildet, deren Verlauf wie bei dem Beispiel nach Fig. 4 mäanderförmig ist. Darüber hinaus weisen einzelne Kühlkanäle 39d' auf einem Teil ihres Umfanges, und zwar auf der der Achse 6 bzw. 7 abgewandten Seite einen Isolator 47 auf, so daß aus dem Bereich der Welle 8, 9 eine gute Wärmeabfuhr erfolgt, während aus dem Außenbereich des Gleit-Lagers - also vom Gehäuse 1 her - nur eine reduzierte Wärmeabfuhr oder Wärmezufuhr erfolgt.

Bei dem Ausführungsbeispiel nach Fig. 8 sind zwei mäanderförmige Kühlkanäle 39e' und 39e'' im Gleit-Lager 12e, 14e vorgesehen. Diesen Kühlkanälen 39e' und 39e'' wird das Kühlmedium, und zwar gegebenenfalls unterschiedliches Kühlmedium mit unterschiedlicher Wärmekapazität, getrennt zugeführt. Es durchströmt die Kühlkanäle 39e', 39e'' in Strömungsrichtung 42e' bzw. 42e''. Die durch die beiden Kühlkanäle 39e' und 39e" getrennt voneinander geführten Kühlmedien können einzeln geregelt oder gesteuert werden, und zwar hinsichtlich ihrer Temperatur und/oder hinsichtlich ihrer Menge pro Zeiteinheit.

Gemäß Fig. 9 können Kühlkanäle 39f nicht nur - wie bei den zuvor beschriebenen Ausführungsbeispielen - seriell, das heißt hintereinander geschaltet, ausgebildet sein, sondern auch in Parallelanordnung durchströmt werden. Hierbei sind im Gleit-Lager 12f Kühlkanäle 39f ausgebildet, die in gleicher Strömungsrichtung 42f durchströmt werden. Im Bereich der beiden Enden eines Gleit-Lagers 12f sind jeweils Verbindungs-Kanäle 48 bzw. 49 ausgebildet. Vom Verbindungs-Kanal 49, in dem das Kühlmedium nach Durchströmen der Kühlkanäle 39f gesammelt wird, führt dann ein Rückströmkanal 50 zum Anschluß an den Überströmkanal 40 oder den Abführkanal 41 zurück. Selbstverständlich können auch hier die Kühlkanäle 39f die Formen und Anordnungen haben, wie sie in den Ausführungsbeispielen nach den Fig. 3 bis 8 niedergelegt worden sind.

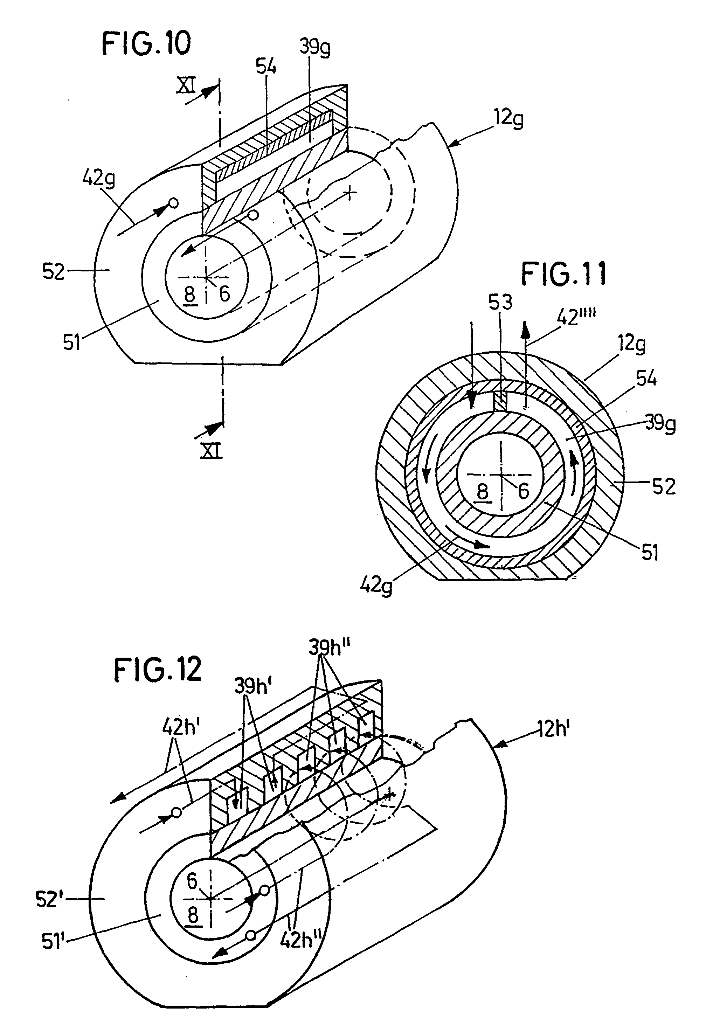

Bei der Ausführungsform nach den Fig. 10 und 11 ist das Gleit-Lager 12g zweiteilig aufgebaut; es besteht aus einer inneren Lager-Büchse 51 und einer Außen-Büchse 52, zwischen denen ein ringzylindrischer Kühlkanal 39g ausgebildet ist, der mittels einer parallel zur Achse 6 verlaufenden Trennwand 53 unterteilt ist, so daß das Kühlmedium zwangsweise in Strömungsrichtung 42g durch den Kühlkanal 39g geleitet und in Strömungsrichtung 42'''' abgeführt wird. Um die Wärmezufuhr, das heißt die Energieeinleitung, vom Gehäuse 1 her zu reduzieren, ist die Außen-Büchse 52 mit einem Isoliermantel 54 ausgekleidet. Dementsprechend findet eine überproportionale Wärmeabfuhr von der Welle 8 her statt.

Auch bei dem Ausführungsbeispiel nach Fig. 12 handelt es sich - wie bei dem Ausführungsbeispiel nach den Fig. 10 und 11 - um eine sogenannte nasse Lager-Büchse. Hierbei ist das Gleit-Lager 12h aus einer Außen-Büchse 52' und einer inneren Lager-Büchse 51' aufgebaut. In der Außen-Büchse 52' sind schraubenlinienförmige Kühlkanäle 39h' und 39h" ausgebildet, die jeweils unterschiedliche Kühlkreise bilden. Ihnen werden hinsichtlich der Temperatur und/oder hinsichtlich der Menge pro Zeiteinheit unter-schiedliche Kühlmedien zugeführt, und zwar in Strömungsrichtung 42h' und 42h''.

Obwohl in den zuvor geschilderten Ausführungsbeispielen überwiegend Ausgestaltungen von Gleit-Lagern geschildert wurden, bei denen jeweils die Kühlkanäle 39 der beiden auf einer Seite der Rotoren 2, 3 angeordneten Gleit-Lager 11,13 bzw. 12, 14 hintereinander geschaltet sind, ist selbstverständlich auch eine separate bzw. parallele Anströmung der einzelnen Kühlkanäle mit Kühlmedium möglich. In diesem Fall wird beispielsweise der Überströmkanal 40 jeweils durch eine Abführung bzw. Zuführung für Kühlmedium ersetzt.

## Patentansprüche

1. Zahnradpumpe
- mit einem Gehäuse (1),
-- das eine Saugseite (24) und eine Druckseite (25) aufweist,
- mit zwei im Gehäuse (1) angeordneten, miteinander kämmenden Zahnrad-Rotoren (2, 3), die
-- ein Fördermedium von der Saugseite (24) zur Druckseite (25) fördern und
-- an ihren Enden Lager-Abschnitte (15 bis 18) aufweisen,
- mit Gleit-Lagem (11 bis 14), die
-- je einen Lager-Abschnitt (15 bis 18) unter Bildung eines Spalts aufnehmen,
-- mittels des Fördermediums schmierbar sind und
-- mindestens einen Kühlkanal (39) aufweisen,
**dadurch gekennzeichnet,**
**daß** der mindestens eine Kühlkanal (39) so ausgestaltet ist, daß über den Umfang und/oder in Längsrichtung und/oder in Radialrichtung des Gleit-Lagers (11 bis 14) eine unterschiedliche Kühlung derart erfolgt, daß im Bereich der geringsten Weite des Spaltes die Kühlung am intensivsten ist.

2. Zahnradpumpe nach Anspruch 1, **dadurch gekennzeichnet,**
**daß** Kühlkanäle (39a) in einem Bereich (43) relativer Verdichtung in größerer Zahl pro Umfangseinheit (a) angeordnet sind, als in anderen Umfangsbereichen der Gleit-Lager (12a, 14a).

3. Zahnradpumpe nach Anspruch 1 oder 2, **dadurch gekennzeichnet,**
**daß** Kühlkanäle (39b', 39b", 39b''', 39b'''') unterschiedlich große Oberflächen aufweisen.

4. Zahnradpumpe nach einem der Ansprüche 1 bis 3, **dadurch gekennzeichnet,**
**daß** Kühlkanäle (39b', 39b", 39b''', 39b'''') unterschiedliche Querschnitte aufweisen.

5. Zahnradpumpe nach einem der Ansprüche 1 bis 4, **dadurch gekennzeichnet,**
**daß** einzelne Kühlkanäle (39c', 39c", 39d') zumindest teilweise Oberflächen mit reduzierter Wärmeleitfähigkeit aufweisen.

6. Zahnradpumpe nach Anspruch 5, **dadurch gekennzeichnet,**
**daß** in einen Kühlkanal (39c', 39c'') eine Isolierbüchse (44, 45) eingesetzt ist.

7. Zahnradpumpe nach Anspruch 6, **dadurch gekennzeichnet,**
**daß** zwischen der Isolierbüchse (45) und dem Gleit-Lager (14c) ein Luftspalt (46) vorgesehen ist.

8. Zahnradpumpe nach Anspruch 5, **dadurch gekennzeichnet,**
**daß** mindestens ein Kühlkanal (39d) auf seiner radial zur Mittel-Längs-Achse (6, 7) außen liegenden Seite mittels eines Isolators (47) teilisoliert ist.

9. Zahnradpumpe nach einem der Ansprüche 1 bis 8, **dadurch gekennzeichnet,**
**daß** zu mindestens zwei voneinander getrennten Kühlkreisläufen zusammengefaßte Kühlkanäle (39e', 39e") vorgesehen sind.

10. Zahnradpumpe nach einem der Ansprüche 1 bis 9, **dadurch gekennzeichnet,**
**daß** die Kühlkanäle (39a, 39b, 39c, 39d, 39e) in Reihe hintereinander geschaltet sind.

11. Zahnradpumpe nach einem der Ansprüche 1 bis 9, **dadurch gekennzeichnet,**
**daß** die Kühlkanäle (39f) in einem Gleit-Lager (12f) parallel zueinander geschaltet sind.

12. Zahnradpumpe nach einem der Ansprüche 1 bis 11, **dadurch gekennzeichnet,**
**daß** die Kühlkanäle (39a, 39b, 39c, 39d, 39e, 39f) langgestreckt ausgebildet sind.

13. Zahnradpumpe nach einem der Ansprüche 1 bis 11, **dadurch gekennzeichnet,**
**daß** der mindestens eine Kühlkanal (39g) ringzylindrisch ausgebildet ist.

14. Zahnradpumpe nach Anspruch 13, **dadurch gekennzeichnet, daß** der mindestens eine Kühlkanal (39g) auf seiner Außenseite mit einem Isoliermantel (54) versehen ist.

15. Zahnradpumpe nach einem der Ansprüche 1 bis 11, **dadurch gekennzeichnet,**
**daß** der mindestens eine Kühlkanal (39h', 39h") schraubenlinienförmig ausgebildet ist.

## Claims

1. A gear pump comprising
- a casing (1),
-- which has a suction side (24) and a delivery side (25);
- two intermeshing gear rotors (2, 3) which are disposed in the casing (1), and
-- which convey a pumping medium from the suction side (24) to the delivery side (25), and
-- which have bearing sections (15 to 18) at their ends;
- plain bearings (11 to 14),
-- each of which, by formation of a clearance, lodges a bearing section (15 to 18),
-- which are lubricated by the pumping medium, and
-- which include at least a cooling duct (39);
**characterized**
**in that** the at least one cooling duct (39) is embodied such that cooling varies along the circumference and/or in the longitudinal direction and/or in the radial direction of the plain bearing (11 to 14) so that the most intense cooling takes place in an area of smallest width of the clearance.

2. A gear pump according to claim 1, **characterized in that** cooling ducts (39a) are disposed in a greater number per peripheral unit (a) in an area (43) where they are closely packed than in other peripheral areas of the plain bearings (12a, 14a).

3. A gear pump according to claim 1 or 2, **characterized in that** cooling ducts (39b', 39b", 39b''', 39b'''') have surfaces of varying dimensions.

4. A gear pump according to one of claims 1 to 3, **characterized in that** cooling ducts (39b', 39b", 39b''', 39b"") have varying cross-sectional shapes.

5. A gear pump according to one of claims 1 to 4, **characterized in that** individual cooling ducts (39c', 39c", 39d'), at least in part, have surfaces of reduced thermal conductivity.

6. A gear pump according to claim 5, **characterized in that** an insulating bush (44, 45) is inserted in a cooling duct (39c', 39c").

7. A gear pump according to claim 6, **characterized in that** a clearance (46) is provided between the insulating bush (45) and the plain bearing (14c).

8. A gear pump according to claim 5, **characterized in that** at least one cooling duct (39d) is partly insulated by an insulator (47) on the side facing outwards radially of the central longitudinal axis (6, 7).

9. A gear pump according to one of claims 1 to 8, **characterized in that** cooling ducts (39e', 39e") are provided which are combined to form at least two separate cooling circuits.

10. A gear pump according to one of claims 1 to 9, **characterized in that** the cooling ducts (39a, 39b, 39c, 39d, 39e) are connected in series.

11. A gear pump according to one of claims 1 to 9, **characterized in that** the cooling ducts (39f) are connected in parallel in a plain bearing (12f).

12. A gear pump according to one of claims 1 to 11, **characterized in that** the cooling ducts (39a, 39b, 39c, 39d, 39e, 39f) are elongated.

13. A gear pump according to one of claims 1 to 11, **characterized in that** the at least one cooling duct (39g) is annular cylindrical.

14. A gear pump according to claim 13, **characterized in that** the at least one cooling duct (39g) is externally provided with an insulating jacket (54).

15. A gear pump according to one of claims 1 to 11, **characterized in that** the at least one cooling duct (39h', 39h") is helical.

## Revendications

1. Pompe à engrenages, comprenant :
un boîtier (1),
-- qui comporte un côté aspiration (24) et un côté refoulement (25),
deux rotors-engrenages (2,3) agencés dans le boîtier (1) et en engrènement mutuel, lesquels :
-- transportent un fluide de travail depuis le côté aspiration (24) vers le côté refoulement (25), et
-- comportent des tronçons de palier (15 à 18) à leurs extrémités,
des paliers coulissants (11 à 14), lesquels :
-- reçoivent chacun un tronçon de palier (15 à 18) en formant un intervalle,
-- sont lubrifiables au moyen du fluide de travail, et
-- comportent au moins un canal de refroidissement (39),
**caractérisée en ce que** ledit au moins un canal de refroidissement (39) est ainsi conçu que sur la périphérie et/ou en direction longitudinale et/ou en direction radiale du palier coulissant (11 à 14) s'effectue un refroidissement différent de telle sorte que le refroidissement est le plus intense dans la région de la plus faible largeur de l'intervalle.

2. Pompe à engrenages selon la revendication 1, **caractérisée en ce que** des canaux de refroidissement (39a) sont agencés dans une région (43) de compression relative (43) suivant un nombre plus élevé par unité de périphérie (a) que dans les autres régions périphériques des paliers coulissants (12a, 14a).

3. Pompe à engrenages selon l'une ou l'autre des revendications 1 et 2, **caractérisée en ce que** les canaux de refroidissement (39b', 39b", 39b''', 39b'''') présentent des surfaces de tailles différentes.

4. Pompe à engrenages selon l'une des revendications 1 à 3, **caractérisée en ce que** les canaux de refroidissement (39b', 39b", 39b''', 39b'''') présentent des sections différentes.

5. Pompe à engrenages selon l'une des revendications 1 à 4, **caractérisée en ce que** des canaux de refroidissement individuels (39c', 39c", 39d') présentent au moins partiellement des surfaces à conductibilité thermique réduite.

6. Pompe à engrenages selon la revendication 5, **caractérisée en ce qu'**une douille isolante (44, 45) est mise en place dans un canal de refroidissement (39c', 39c").

7. Pompe à engrenages selon la revendication 6, **caractérisée en ce qu'**il est prévu un intervalle d'air (46) entre la douille isolante (45) et le palier coulissant (14c).

8. Pompe à engrenages selon la revendication 5, **caractérisée en ce qu'**un canal de refroidissement (39d) au moins est partiellement isolé au moyen d'un isolateur (47) sur son côté situé radialement à l'extérieur par rapport à l'axe longitudinal médian (6, 7).

9. Pompe à engrenages selon l'une des revendications 1 à 8, **caractérisée en ce qu'**il est prévu des canaux de refroidissement (39c', 39c") regroupés en au moins deux circuits de refroidissement séparés l'un de l'autre.

10. Pompe à engrenages selon l'une des revendications 1 à 9, **caractérisée en ce que** les canaux de refroidissement (39a, 39b, 39c, 39d, 39e) sont branchés en série les uns derrière les autres.

11. Pompe à engrenages selon l'une des revendications 1 à 9, **caractérisée en ce que** les canaux de refroidissement (39f) dans un palier coulissant (12f) sont branchés parallèlement les uns par rapport aux autres.

12. Pompe à engrenages selon l'une des revendications 1 à 11, **caractérisée en ce que** les canaux de refroidissement (39a, 39b, 39c, 39d, 39e, 39f) sont réalisés sous forme oblongue.

13. Pompe à engrenages selon l'une des revendications 1 à 11, **caractérisée en ce que** ledit au moins un canal de refroidissement (39g) est réalisé sous forme cylindrique droite.

14. Pompe à engrenages selon la revendication 13, **caractérisée en ce que** ledit au moins un canal de refroidissement (39g) est pourvu d'une enveloppe isolante (54) sur son côté extérieur.

15. Pompe à engrenages selon l'une des revendications 1 à 11, **caractérisée en ce que** ledit au moins un canal de refroidissement (39h', 39h") est réalisé sous forme hélicoïdale.
